# EUROPEAN PATENT SPECIFICATION

(11) **EP 2 177 540 B1**
(45) Date of publication and mention of the grant of the patent: **20.03.2013**
(21) Application number: 08777137.4
(22) Date of filing: 10.06.2008
(51) Int. Cl.: C08F 2/18, C08F 2/00

(54) **PROCESS FOR PRODUCING VINYL RESIN**
VERFAHREN ZUR HERSTELLUNG VON VINYLHARZ
PROCÉDÉ DE FABRICATION D'UNE RÉSINE VINYLIQUE

(30) Priority: 13.07.2007 JP 2007183893; 13.07.2007 JP 2007183894
(43) Date of publication of application: 21.04.2010
(73) Proprietor: Kuraray Co., Ltd., Okayama 710-0801 (JP)
(72) Inventor: KATO, Masaki, Kurashiki-shi Okayama 713-8550 (JP); NAKAMAE, Masato, Kurashiki-shi Okayama 713-8550 (JP)
(74) Representative: Brunetti, Fabrizio
(86) International application number: PCT/JP2008/060620
(87) International publication number: WO 2009/011187

(56) References cited:
- EP-A1- 2 006 307
- EP-A2- 0 623 632
- WO-A1-2007/119735
- JP-A- 8 283 313
- JP-A- 07 173 219
- JP-A- 55 029 579
- JP-A- 57 119 902
- JP-A- 2007 063 369
- US-A- 5 204 421
- US-A- 5 780 547

## Description

### TECHNICAL FIELD

The present invention relates to a method for producing a vinyl resin with excellent productivity through suspension polymerization of a vinyl compound using a polymerization tank equipped with a reflux condenser. More specifically, it relates to a method for producing a vinyl resin in which uniform vinyl chloride polymer particles are obtained and an excellent defoaming property is achieved against dry foam that occurs in the polymerization tank at middle to later stages of polymerization.

### BACKGROUND ART

Recently, in producing vinyl resins such as polyvinyl chloride, reduction of the time needed for one polymerization batch is desired in order to improve the productivity. Thus, there is proposed a method in which a polymerization tank equipped with a reflux condenser is used for increasing the speed of removal of polymerization heat, or a method (hot charging) in which a preheated aqueous medium is introduced for reducing the heating time. However, in the case of using such a polymerization tank equipped with a reflux condenser, there has been a problem in that the pressure around the reflux condenser decreases with the condensation of the vapor of a vinyl compound (monomer), resulting in an increase of occurrence of wet foam or dry foam. Wet foam primarily contains water derived mainly from polyvinyl alcohol. On the other hand, dry foam primarily contains polyvinyl chloride (PVC) or a vinyl chloride monomer (VCM), which mainly occurs at middle to later stages of polymerization. Dry foam that has occurred covers the liquid layer surface of the introduced mixture and floats thereon. Such foam is difficult to remove even by stirring, and therefore it is subjected to polymerization in foam form, as it is. For this reason, there have been problems, for example, in that (1) scale adheres to the interface between a vapor phase portion and a liquid phase portion to which foam adheres in the polymerization tank, thereby decreasing productivity, (2) the scale adhesion makes the temperature control of the polymerization tank impossible, (3) a polymer in foam form is formed, thereby decreasing the yield, (4) fish-eye is formed, thereby decreasing product quality, and (5) irregular particles derived from the foamed polymer are mixed, which makes it impossible to obtain uniform particles. These problems tend to increase with an increase in size of the reflux condenser. Further, in the case of not using a reflux condenser, although no dry foam occurs, there is a problem of low productivity because a longer polymerization time is required.

In response to these, patent document 1 (JP 2(1990)-180908 A) discloses a method in which, at the time when the amount of polymerization heat removed by a reflux condenser is 10% or less of the total polymerization heat, silicones such as dimethyl polysiloxane, polyvinyl alcohol with a low saponification degree or the like is added.

Patent document 2 (JP 3(1991)-212409 A) discloses a method in which, before the amount of polymerization heat removed by a reflux condenser exceeds 10% of the total polymerization heat, with respect to 100 parts by weight of a vinyl chloride monomer, 0.002 to 0.007 part by weight of water-insoluble partially saponified polyvinyl alcohol having a saponification degree of 20 to 50 mol% and a polymerization degree of 200 to 400, and 0.001 to 0.01 part by weight of a defoamer such as dimethyl polysiloxane are added.

Patent document 3 (JP 55(1980)-137105 A) discloses that ion-modified polyvinyl alcohol having a saponification degree of 60 to 80% is added before the start of polymerization.

Patent document 4 (JP 7(1995)-179507 A) discloses a method in which, at the time when the polymerization conversion is 5 to 50%, water-soluble polyvinyl alcohol having a saponification degree of 70 to 85 mol% and a polymerization degree of 700 to 3000 is added, and the polymerization is carried out at a temperature ranging from 58 to 70°C.

Further, patent document 5 (JP 7(1995)-53607 A) discloses a method in which, during the period from the start of polymerization to the time when the polymerization conversion is 5 to 50%, water-soluble polyvinyl alcohol having a saponification degree of 70 to 85 mol% and a polymerization degree of 700 to 3000 is added continuously or consecutively.

Patent document 6 (JP 7(1995)-18007 A) discloses a method in which, while the polymerization conversion is 30 to 60%, water-soluble polyvinyl alcohol having a saponification degree of 75 to 85 mol% and a polymerization degree of 1500 to 2700 is added.

Patent document 7 (JP 8(1996)-73512 A) discloses a method in which, while the polymerization conversion is 20 to 60%, partially saponified polyvinyl alcohol having a saponification degree of 20 to 55 mol% and an average polymerization degree of 150 to 600 is added.

Patent document 8 (JP 10(1998)-1503 A) discloses a method in which, at the time when the polymerization conversion is 30 to 90%, a vinyl alcohol polymer having a saponification degree of 85 mol% or less is added.

Patent document 9 (JP 11(1999)-116630 A) discloses a method in which, at the time when the polymerization conversion is 30 to 90%, a vinyl alcohol polymer having a saponification degree of 85 mol% or less is added continuously or in two or more times.

Patent document 10 (JP 2001-122910 A) discloses a method in which, at the time when the polymerization conversion is 30% or more, a polyvinyl alcohol resin having a saponification degree of 65 mol% or more and a polymerization degree of 700 or more that satisfies the formula, 0.0300 ≤ (3-Y)/X ≤ 0.0330, is added (wherein X: a saponification degree, and Y: iodine color development).

However, the methods disclosed in the patent documents 1 and 2 have suffered from a problem that occurrence of dry foam is increased, and thus the packing specific gravity of the vinyl chloride resin tends to decrease. The methods disclosed in the patent documents 3, 4, 5, 6 and 7 also have a problem that since a reflux condenser is not used, the polymerization time needs to be long, resulting in low productivity Further, although the methods disclosed in the patent documents 8, 9 and 10 use a polymerization tank equipped with a reflux condenser and thus high productivity is achieved, they are far from satisfactory concerning the defoaming property for preventing dry foam and still have problems such as scale adhesion. Thus, further improvement has been desired.

### DISCLOSURE OF THE INVENTION

It is an object of the present invention to provide a method for producing a vinyl resin in which, in suspension polymerization of a vinyl compound using a polymerization tank equipped with a reflux condenser, uniform vinyl chloride polymer particles are obtained and an excellent defoaming property is achieved against dry foam that occurs at middle to later stages of polymerization.

As a result of diligent studies in order to solve the above problems, the inventors has found that, in suspension polymerization of a vinyl compound using a polymerization tank equipped with a reflux condenser in the presence of a dispersion stabilizer for suspension polymerization, the above-mentioned problem could be solved by the following method: at the time when the polymerization conversion is 20-85%, 0.001 to 5 parts by weight of a vinyl alcohol polymer (A) that has, in its side chain, an unsaturated double bond, an aromatic group optionally having a carboxyl group, a saturated aliphatic group having a carboxyl group, or a saturated aliphatic group having at least 11 carbon atoms is added, with respect to 100 parts by weight of the vinyl compound wherein the polymer is obtained as disclosed is claimed 1. Thus, the present invention has been accomplished.

According to the method of the present invention for producing a vinyl resin, an excellent defoaming property is achieved against dry foam that occurs at middle to later stages of polymerization, and thus the productivity of the vinyl resin can be enhanced. Further, vinyl polymer particles having a uniform particle size are obtainable, and thus it is possible to provide a high quality vinyl resin.

### BEST MODE FOR CARRYING OUT THE INVENTION

Hereafter, the present invention is described in detail. In the present invention, a reflux condenser is used to efficiently remove the polymerization heat generated by suspension polymerization of a vinyl compound. The vapor of a unreacted vinyl compound (monomer) that is generated from the suspension in a polymerization tank is liquefied by a reflux condenser, and returned into the polymerization tank, so that the polymerization heat is removed. The temperature of the cooling water in the reflux condenser is generally 10 to 50°C. Generally, a jacket or a coil is used in combination for controlling the temperature of the polymerization tank in addition to the reflux condenser that removes heat. The amount of polymerization heat to be removed by the reflux condenser is not particularly limited, but it is preferably 10 to 80%, more preferably 20 to 60%, of the total polymerization heat.

The suspension polymerization of the vinyl compound is carried out in the presence of a dispersion stabilizer for suspension polymerization. There is no particular limitation with respect to the dispersion stabilizer for suspension polymerization. Examples thereof include cellulose derivatives such as methylcellulose, hydroxypropylcellulose, hydroxypropylmethylcellulose, and carboxymethylcellulose, and water-soluble polymers such as gelatin, polyvinyl alcohol, and polyvinylpyrrolidone. Among these, polyvinyl alcohol having a saponification degree of 60 to 95 mol%, preferably 68 to 93mol%, and a polymerization degree of 200 to 3500, preferably 500 to 2500, is suitable for use.

In the present invention, although the amount of the dispersion stabilizer for suspension polymerization to be used is not particularly limited, it is preferably 0.01 to 5 parts by weight, more preferably 0.02 to 2 parts by weight, further preferably 0.02 to 1 part by weight, with respect to 100 parts by weight of the vinyl compound. If the amount thereof is less than 0.01 part by weight, there may be a case where the polymerization stability decreases in suspension polymerization of the vinyl compound. If it exceeds 5 parts by weight, there may be a case where the liquid waste after the suspension polymerization is turbid, resulting in an increase in chemical oxygen demand (COD).

In the present invention, in the case of suspension polymerization of a vinyl compound using a polymerization tank equipped with a reflux condenser in the presence of a dispersion stabilizer for suspension polymerization, at the time when the polymerization conversion is 20-80%, a vinyl alcohol polymer (A) (hereinafter, which may be abbreviated as PVA (A)) that has, in its side chain, an unsaturated double bond, an aromatic group optionally having a carboxyl group, a saturated aliphatic group having a carboxyl group, or a saturated aliphatic group having at least 11 carbon atoms is added. Different from the conventionally used partially saponified polyvinyl alcohol, the PVA (A) has such a functional group in its side chain. By using such PVA (A), the defoaming property that prevents dry foam is improved, scale adhesion is prevented, and the uniformity of vinyl polymer particles to be obtained is improved.

The PVA (A) may have two or more kinds of functional groups selected from an unsaturated double bond, an aromatic group optionally having a carboxyl group, a saturated aliphatic group having a carboxyl group, and a saturated aliphatic group having at least 11 carbon atoms in a molecule. The PVA (A) preferably has, in its side chain, an unsaturated double bond, an aromatic group having a carboxyl group, or a saturated aliphatic group having a carboxyl group.

The amount of the above-mentioned functional groups included in the side chain of the PVA (A) is preferably 0.01 to 50 mol%, more preferably 0.01 to 25 mol%, further preferably 0.02 to 20 mol%, most preferably 0.05 to 15 mol%, with respect to monomer units of the PVA (A).

The polymerization degree of the PVA (A) is preferably at least 200, more preferably 200 to 3000, further preferably 300 to 2500. If the polymerization degree is less than 200, there may be a case where the prevention effect against dry foam is insufficient and wet foam increases conversely. If it exceeds 3000, there may be a case where the plasticizer absorptivity of the vinyl resin to be obtained decreases.

In the present invention, the specific structure of the PVA (A) is not particularly limited as long as an unsaturated double bond, an aromatic group optionally having a carboxyl group, a saturated aliphatic group having a carboxyl group, or a saturated aliphatic group having at least 11 carbon atoms is included in the side chain of the polymer. These functional groups each one bonded to the main chain of the PVA (A) via an ester bond, an ether bond, an urethane bond. Further, these functional groups may be substituted by a hydroxyl group In view of ease of production, the PVA (A) preferably has a structure obtained by esterification of a vinyl alcohol polymer (B) with a carboxylic acid compound having an unsaturated double bond, an aromatic group optionally having a carboxyl group, a saturated aliphatic group having a carboxyl group, or a saturated aliphatic group having at least 11 carbon atoms.

Examples of the carboxylic acid compound having an unsaturated double bond include: unsaturated monocarboxylic acids such as acrylic acid, methacrylic acid, crotonic acid, isocrotonic acid, 2-pentenoic acid, 4-pentenoic acid, 2-heptenoic acid, 2-octenoic acid, cinnamic acid, myristoleic acid, palmitoleic acid, oleic acid, elaidic acid, vaccenic acid, gadoleic acid, erucic acid, nervonic acid, linoleic acid, linolenic acid, eleostearic acid, stearidonic acid, arachidonic acid, eicosapentaenoic acid, clupanodonic acid, docosahexaenoic acid, and sorbic acid; and unsaturated dicarboxylic acids such as maleic acid, fumaric acid, itaconic acid, citraconic acid, and mesaconic acid. Two or more kinds of the carboxylic acid compound having an unsaturated double bond may be used. The carboxylic acid compound having an unsaturated double bond may be used as an anhydride or ester when producing the PVA (A). Examples thereof include unsaturated carboxylic acid anhydrides such as maleic anhydride, fumaric anhydride, itaconic anhydride, and citraconic anhydride; unsaturated dicarboxylic acid monoesters such as maleic acid monoalkyl ester, fumaric acid monoalkyl ester, and itaconic acid monoalkyl ester; and unsaturated dicarboxylic acid diesters such as maleic acid dialkyl ester, fumaric acid dialkyl ester, and itaconic acid dialkyl ester. These carboxylic acid compounds also can be used as salts thereof.

Examples of the carboxylic acid compound having an aromatic group optionally having a carboxyl group (containing no olefinically unsaturated bond) include: aromatic monocarboxylic acids such as phenylacetic acid, benzoic acid, p-hydroxybenzoic acid, toluic acid, and salicylic acid, as one having an aromatic group having no carboxyl group; and aromatic dicarboxylic acids such as phthalic acid, isophthalic acid, and terephthalic acid, as one having an aromatic group having a carboxyl group.

Examples of the carboxylic acid compound having a saturated aliphatic group having a carboxyl group include: aliphatic dicarboxylic acids such as oxalic acid, malonic acid, succinic acid, glutaric acid, adipic acid, pimelic acid, suberic acid, azelaic acid, sebacic acid, tartaric acid, and malic acid; and aliphatic tricarboxylic acids such as citric acid.

Examples of the carboxylic acid compound having a saturated aliphatic group having at least 11 carbon atoms (having no carboxyl group) include lauric acid, myristic acid, palmitic acid and stearic acid. The saturated aliphatic group included in the carboxylic acid compound preferably has 11 to 20 carbon atoms.

Such an aromatic carboxylic acid compound and a carboxylic acid compound having a saturated aliphatic group may be used in the form of salts, in production of PVA (A).

It is preferable that the above-mentioned carboxylic acid compounds (particularly, the aromatic carboxylic acid compound and the carboxylic acid compound having a saturated aliphatic group) each be a carboxylic acid having at least two carboxyl groups (that is, a dicarboxylic acid, a tricarboxylic acid or the like).

The saponification degree of the vinyl alcohol polymer (B) (hereinafter, which may be abbreviated as PVA (B)) is preferably 50 to 99 mol%, more preferably 60 to 98 mol%, and further preferably 70 to 95 mol%. If the saponification degree is less than 50 mol%, there may be a case where the prevention effect against dry foam cannot be obtained and foam occurs. If it exceeds 99%, there may be a case where the plasticizer absorptivity of the vinyl resin to be obtained decreases. When using the PVA (B) having a saponification degree of less than 100%, the carboxylic acid compound is preferably selected so that a vinyl ester unit different from a vinyl ester unit originally included in the PVA (B) is introduced by esterification with the carboxylic acid compound. By the introduction of the vinyl ester unit different from the vinyl ester unit included in the PVA (B), the functions of the PVA (A) can be further enhanced.

The polymerization degree of the PVA (B) is preferably at least 200, more preferably 200 to 3000, and further preferably 300 to 2500. If the polymerization degree is less than 200, there may be a case where the prevention effect against dry foam is insufficient and wet foam increases conversely. If it exceeds 3000, there may be a case where the plasticizer absorptivity of the vinyl resin to be obtained decreases.

In the present invention, the PVA (B) may be used independently, or two or more kinds each having a different property may be mixed to be used.

In the present invention, the PVA (B) can be produced by polymerizing a vinyl ester monomer using a conventionally known polymerization method, such as a bulk polymerization method, a solution polymerization method, a suspension polymerization method, an emulsion polymerization method, or a dispersion polymerization method, and saponifying the obtained vinyl ester polymer. From the industrial viewpoint, preferable polymerization methods are the solution polymerization method, the emulsion polymerization method, and the dispersion polymerization method. For a polymerization operation, it is possible to employ any polymerization method selected from the batch method, the semibatch method, and the continuous method.

Examples of the vinyl ester monomer that can be used for polymerization include vinyl acetate, vinyl formate, vinyl propionate, vinyl caprylate, and vinyl versatate. Among these, the vinyl acetate is preferable from the industrial viewpoint.

In polymerization of the vinyl ester monomer, the vinyl ester monomer may be copolymerized with other monomers, as long as it is in the range in which the spirit of the present invention is not impaired. Examples of the monomers that can be used include: alpha-olefins such as ethylene, propylene, n-butene, and isobutylene; acrylic acid and salts thereof acrylic acid esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid and salts thereof methacrylic acid esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide, acrylamide derivatives such as N-methylacrylamide, N-ethylacrylamide, N,N-dimethylacrylamide, diacetone acrylamide, acrylamide propanesulfonic acid and salts thereof, acrylamide propyldimethylamine and acid salts thereof or quaternary salt thereof, and N-methylolacrylamide and derivatives thereof methacrylamide, methacrylamide derivatives such as N-methylmethacrylamide, N-ethylmethacrylamide, methacrylamide propanesulfonic acid and salts thereof, methacrylamide propyldimethylamine and acid salts thereof or quaternary salt thereof, and N-methylolmethacrylamide and derivatives thereof vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles such as acrylonitrile and methacrylonitrile; halogenated vinyls such as vinyl chloride and vinyl fluoride; halogenated vinylidenes such as vinylidene chloride and vinylidene fluoride; allyl compounds such as allyl acetate and allyl chloride; unsaturated dicarboxylic acids such as maleic acid, itaconic acid, and fumaric acid, and salts thereof or esters thereof vinylsilyl compounds such as vinyltrimethoxysilane; monomers containing an oxyalkylene group such as polyoxyethylene(meth)acrylate, polyoxypropylene(meth)acrylate, polyoxyethylene(meth)acrylic acid amide, polyoxypropylene(meth)acrylic acid amide, polyoxyethylene(1-(meth)acrylamide-1,1-dimethylpropyl)ester, polyoxyethylene (meth)allyl ether, polyoxypropylene (meth)allyl ether, polyoxyethylene vinyl ether, and polyoxypropylene vinyl ether; and isopropenyl acetate.

Furthermore, in polymerization of the vinyl ester monomer, a chain transfer agent can be present together for the purposes of, for example, adjusting the polymerization degree of the vinyl ester polymer to be obtained. Examples of the chain transfer agent include: aldehydes such as acetaldehyde, propionaldehyde, butyraldehyde, and benzaldehyde; ketones such as acetone, methyl ethyl ketone, hexanone, and cyclohexanone; mercaptans such as 2-hydroxyethanethiol and dodecyl mercaptan; and halogenated hydrocarbons such as trichloroethylene and perchloroethylene. Particularly, aldehydes and ketones are used suitably. The amount of the chain transfer agent to be added is determined according to the chain transfer constant of the chain transfer agent to be added and the target polymerization degree of the vinyl ester polymer. Generally, the amount is desirably 0.1 to 10 wt% with respect to the vinyl ester monomer.

In the present invention, PVA having a large content of 1,2-glycol bonds that can be obtained through polymerization of a vinyl ester monomer under a higher temperature condition than usual also can be used. In this case, the content of 1,2-glycol bonds is preferably at least 1.9 mol%, more preferably at least 2.0 mol%, further preferably at least 2.1 mol%.

An alcoholysis or hydrolysis reaction that is carried out using a conventionally known basic catalyst such as sodium hydroxide, potassium hydroxide or sodium methoxide, or an conventionally known acidic catalyst such as p-toluenesulfonic acid can be used for the saponification reaction of a vinyl ester polymer. Examples of the solvent that is used for the saponification reaction include: alcohols such as methanol and ethanol; esters such as methyl acetate and ethyl acetate; ketones such as acetone and methyl ethyl ketone; and aromatic hydrocarbons such as benzene and toluene. These can be used independently, or two or more of them can be used in combination. Particularly, it is easy and preferable to use methanol or a mixed solution of methanol and methyl acetate as the solvent and carry out the saponification reaction in the presence of sodium hydroxide that serves as a basic catalyst.

The PVA (B) may have an ionic functional group at the end thereof. Examples of the ionic functional group include a carboxyl group and a sulfonic acid group. Particularly, the carboxyl group is preferable. Examples of the ionic functional group also include salts thereof, and an alkali metal salt is preferable from the viewpoint that the PVA (B) is preferably water dispersible. As a method for introducing such an ionic functional group into the end portion of the PVA, for example, a method can be used in which a vinyl ester monomer such as vinyl acetate is polymerized in the presence of a thiol compound such as thiolacetic acid, mercaptopropionic acid, or 3-mercapto-1-propanesulfonic acid sodium salt, and the polymer thus obtained is saponified.

In the present invention, the PVA (A) can be obtained, for example, by esterification of the vinyl alcohol polymer (B) with a carboxylic acid that has an unsaturated double bond, an aromatic group optionally having a carboxyl group, a saturated aliphatic group having a carboxyl group, or a saturated aliphatic group having at least 11 carbon atoms.

There is no particular limitation with respect to the method for esterifying the PVA (B) with the carboxylic acid compound. Examples of the method include: (i) a method in which the PVA (B) is allowed to react with the carboxylic acid compound in an anhydrous solvent in the suspended state; (ii) a method in which the carboxylic acid compound that is in powder form or that has been dissolved or dispersed in water, methyl acetate, ethyl acetate or alcohol such as methanol, ethanol and propanol is mixed with the PVA (B) in slurry form or powder form, which is then heat-treated under a nitrogen or air atmosphere to be reacted; (iii) a method in which the PVA (B) obtained by adding the carboxylic acid compound to polyvinyl acetate in paste form and saponifying it is heat-treated; and (iv) a method in which the PVA (B) and the carboxylic acid compound are dry-blended with, for example, a ribbon Brabender, a V-type Brabender, or a Henschel mixer, which is then melted and kneaded using, for example, a Banbury mixer, a mixing roll, a single or twin screw extruder, and a kneader. Among these, preferable methods are the method (ii) in which the PVA (B) and the carboxylic acid compound are mixed, which is then heat-treated under a nitrogen atmosphere to be reacted and the method (iv) in which the PVA (B) and the carboxylic acid compound are melted and kneaded.

In the above-mentioned method (ii), the conditions for heat-treating the mixture of the PVA (B) and the carboxylic acid compound are not particularly limited. However, the heat treatment temperature is preferably 60 to 190°C, more preferably 65 to 185°C, and further preferably 70 to 180°C. Furthermore, the heat treatment time is preferably 0.5 to 20 hours, more preferably 1 to 18 hours, and further preferably 1 to 16 hours.

In the aforementioned method (iv), the temperature to be employed for melting and kneading the PVA (B) and the carboxylic acid compound is preferably 130 to 250°C, more preferably 140 to 220°C. The period of time for which the PVA (B) and the carboxylic acid having an unsaturated double bond are retained inside the apparatus used for melting and kneading them is preferably 1 to 15 minutes, more preferably 2 to 10 minutes.

When the PVA (B) and the carboxylic acid compound are heat-treated, a plasticizer that is used generally for PVA can be mixed to prevent decomposition of the PVA and to prevent coloring caused by formation of polyene in the main chain of the PVA, and this also makes it possible to decrease the heat treatment temperature. Examples of the plasticizer include: polyhydric alcohols such as glycerol, diglycerol, polyethylene glycol, polypropylene glycol, and sorbitol; compounds obtained by addition of ethylene oxide to those alcohols; water; saccharides; polyethers; and amide compounds. One of these can be used, or two or more of them can be used in combination. The amount of those plasticizers to be used is generally 1 to 300 parts by weight, more preferably 1 to 200 parts by weight, and further preferably 1 to 100 parts by weight, with respect to 100 parts by weight of the PVA (B).

When the PVA (B) and the carboxylic acid compound are heat-treated, it is preferable that alkali metal ions be contained at a ratio of 0.003 to 3 parts by weight with respect to 100 parts by weight of the PVA (B), because in this case, for example, thermal degradation, pyrolysis, gelation, and coloring of the PVA (B) can be prevented from occurring. Examples of the alkali metal ions include potassium ions, sodium ions, and magnesium ions. They are mainly present as a salt of lower fatty acid such as acetic acid or propionic acid. When the PVA (B) has a carboxyl group or a sulfonic acid group, they are present as salts of these functional groups. The content of the alkali metal ions in the PVA can be measured by the atomic absorption method.

In order to promote esterification of the PVA (B) with the carboxylic acid compound, it also is possible to heat-treat the PVA (B) and the carboxylic acid compound with an acid substance or basic substance to serve as a catalyst being mixed therewith. Examples of the acid substance include inorganic acids such as hydrochloric acid, sulfuric acid, nitric acid, and phosphoric acid; organic acids such as formic acid, acetic acid, oxalic acid, and p-toluenesulfonic acid; salts such as pyridinium p-toluenesulfonate and ammonium chloride; and Lewis acids such as zinc chloride, aluminum chloride, iron(III) chloride, tin(II) chloride, tin(IV) chloride, and a boron trifluoride diethylether complex. One of these can be used, or two or more of them can be used in combination. Furthermore, examples of the basic substance include alkali metal hydroxides such as sodium hydroxide and potassium hydroxide; alkali metal carbonates such as sodium carbonate and potassium carbonate; metal oxides such as barium oxide and silver oxide; alkali metal hydrides such as sodium hydride and potassium hydride; alkali metal alkoxides such as sodium methoxide and sodium ethoxide; and alkali metal amides such as sodium amide and potassium amide. One of these can be used, or two or more of them can be used in combination. Generally, the amount of such an acid substance and basic substance to be mixed is preferably 0.0001 to 5 parts by weight with respect to 100 parts by weight of the PVA (B).

In the case of using a carboxylic acid compound having an unsaturated double bond as the carboxylic acid compound, when heat-treating the PVA (B) and the carboxylic acid compound having an unsaturated double bond, it is also possible to mix a polymerization inhibitor therein to prevent a gel from being formed through thermal polymerization of the PVA (B) or the carboxylic acid compound. Examples of the polymerization inhibitor include phenolic polymerization inhibitors such as hydroquinone and hydroquinone monomethyl ether, phenothiazine, and N,N-diphenyl-p-phenylenediamine. The amount of the polymerization inhibitor to be mixed is preferably 0.00001 to 10 parts by weight, more preferably 0.0001 to 1 part by weight, with respect to 100 parts by weight of the PVA (B).

By esterifying the PVA (B) with the carboxylic acid compound, the PVA (A) is obtained. The amount of modification with the carboxylic acid compound can be measured by, for example, a method in which an unreacted carboxylic acid compound is measured by liquid chromatography. In the case where a carboxylic acid compound having an unsaturated double bond is used as the carboxylic acid, it can be measured also by a method in which the PVA (A) is dissolved in a DMSO-d₆ solvent, which is measured by ¹H-NMR and thereby the signal derived from the double bond is analyzed.

As to the PVA (A), the amount of modification with the carboxylic acid compound introduced through esterification is preferably 0.01 to 50 mol%, more preferably 0.01 to 25 mol%, further preferably 0.02 to 20 mol%, particularly preferably 0.05 to 15 mol%, with respect to monomer units of the PVA (B).

When the PVA (A) is PVA obtained by esterifying the PVA (B) with a carboxylic acid compound having two or more carboxyl groups, in order to improve the water solubility thereof, the carboxyl group that is not involved in the ester bond is reacted suitably with any one of hydroxides of monovalent to trivalent metals, salts, alkoxide, ammonia, ammonium salt, amine salt, and amine salts.

In suspension polymerization of the vinyl compound, the addition time of the PVA (A) is at the time when the polymerization conversion of the vinyl compound is 20 to 85%. Since the PVA (A) is to be added during suspension polymerization, it is needless to say that it should be added before the completion of polymerization reaction at latest. In this regard, although the polymerization conversion at the time of the completion of polymerization reaction depends on, for example, the kinds of the vinyl compound to be polymerized and the polymerization initiator to be used, and the reaction conditions, it is recommended that the PVA (A) be added by the time when the polymerization conversion is 20% to 85%. Further, in the case where foaming due to dry foam occurs just before the internal pressure of the polymerization tank starts to decrease or just after the internal pressure of the polymerization tank have started to decrease, the PVA (A) is added preferably also at such time. The method for adding the PVA (A) is not particularly limited, but examples thereof include a method of adding it in the form of an aqueous solution, an aqueous dispersion, a solution in an organic solvent such as methanol, or a methanol-water mixed solution. The concentration of the PVA (A) in the solution is generally 0.01 to 30 wt%. The temperature of the PVA (A) solution is not particularly limited. It may be a room temperature or may be raised to polymerization temperature. The amount of the PVA (A) to be added is 0.001 to 5 parts by weight, preferably 0.001 to 0.5 part by weight, more preferably 0.01 to 0.1 part by weight, with respect to 100 parts by weight of the vinyl compound to be subjected to suspension polymerization. If the amount of the PVA (A) to be added is less than 0.001 part by weight, the prevention effect against dry foam is insufficient, while if the amount of the PVA (A) to be added exceeds 5 parts by weight, the bulk density of the vinyl chloride resin to be obtained increases too much, unpreferably.

In the present invention, the PVA (A) may be used independently, or two or more kinds each having a different property may be mixed to be used.

Examples of the vinyl compound to be subjected to suspension polymerization include: vinyl halides such as vinyl chloride; vinyl esters such as vinyl acetate and vinyl propionate; acrylic acid, methacrylic acid, and esters and salts thereof maleic acid, fumaric acid, and esters and anhydrides thereof styrene, acrylonitrile, vinylidene chloride, and vinyl ether. Among these, particularly suitably, vinyl chloride is used. The suspension polymerization of vinyl chloride may be homopolymerization or copolymerization. Examples of the monomers capable of copolymerizing with vinyl chloride include: vinyl esters such as vinyl acetate and vinyl propionate; (meth)acrylic acid esters such as methyl (meth)acrylate and ethyl (meth)acrylate; alpha-olefins such as ethylene and propylene; unsaturated dicarboxylic acids such as maleic anhydride and itaconic acid; acrylonitrile, styrene, vinylidene chloride, and vinyl ether.

As a polymerization initiator that can be used for the suspension polymerization of the vinyl compound, any oil-soluble or water-soluble catalysts used conventionally for polymerization of vinyl chloride monomers or the like also can be used. Examples of the oil-soluble catalysts include: percarbonate compounds such as diisopropyl peroxydicarbonate, di-2-ethylhexyl peroxydicarbonate, and diethoxyethyl peroxydicarbonate; perester compounds such as t-butyl peroxyneoheptanoate, t-butyl peroxyneodecanoate, t-butyl peroxypivalate, t-hexyl peroxypivalate, and alpha-cumyl peroxyneodecanoate; peroxides such as acetyl cyclohexyl sulfonyl peroxide, 2,4,4-trimethylpentyl-2-peroxyphenoxyacetate, 3,5,5-trimethylhexanoyl peroxide, and lauroyl peroxide; and azo compounds such as azobis-2,4-dimethylvaleronitrile and azobis(4-2,4-dimethylvaleronitrile). Examples of the water-soluble catalysts include potassium persulfate, ammonium persulfate, hydrogen peroxide, and cumene hydroperoxide. These oil-soluble or water-soluble catalysts can be used independently, or two or more of them can be used in combination.

In the suspension polymerization of the vinyl compound, other various additives can be added to the polymerization reaction system as required. Examples of the additives include polymerization regulators such as aldehydes, halogenated hydrocarbons, and mercaptans, and polymerization inhibitors such as phenol compounds, sulfur compounds, and N-oxide compounds. Furthermore, a pH adjuster and a cross-linker also can be added optionally. A plurality of these additives may be used in combination.

In the suspension polymerization of the vinyl compound, a partially saponified vinyl alcohol polymer having a saponification degree of 60 mol% or less may be used as a dispersion stabilizing aid. The amount thereof to be added is preferably 0.1 to 120 parts by weight, more preferably 0.5 to 110 parts by weight, particularly preferably 1 to 100 parts by weight, with respect to 100 parts by weight of the dispersion stabilizer for suspension polymerization. The partially saponified vinyl alcohol polymer to be used as a dispersion stabilizing aid may be, for example, a partially saponified vinyl alcohol polymer containing 10 mol% or less of oxyalkylene groups or ionic groups such as a carboxyl group in its side chain or ends, other than an unmodified partially saponified vinyl alcohol polymer.

In the present invention, in the suspension polymerization of the vinyl compound, an oil-soluble emulsifier such as sorbitan monolaurate, sorbitan trioleate, glycerol tristearate, and an ethylene oxide/propylene oxide block copolymer; or a water-soluble emulsifier such as polyoxyethylene sorbitan monolaurate, polyoxyethylene glycerol oleate, or sodium laurate may be used. The amount thereof to be added is not particularly limited, but it is preferably 0.01 to 1.0 part by weight per 100 parts by weight of the vinyl compound.

According to the method of the present invention for producing a vinyl resin, an excellent defoaming property can be achieved against dry foam that occurs at middle to later stages of the polymerization, thereby allowing the productivity of the vinyl resin to be improved. Moreover, vinyl polymer particles having a uniform particle size are obtainable, and thus it is possible to provide a high quality vinyl resin.

Hereinafter, the present invention is described in further detail using examples. In the following examples and comparative examples, "part(s)" and "%" denote "part(s) by weight "and "wt%", respectively, unless otherwise specified.

PVA, vinyl chloride polymer particles and the occurrence of dry foam were evaluated as follows.

### <Analysis of PVA>

### (1) Measurement of amount of carboxylic acid modification

An HPLC measurement was performed at 30°C in which 1g of PVA was dissolved in 100g of ion-exchanged water, an ODS column was used and a 0.1 M aqueous solution of ammonium dihydrogen phosphate was used as a mobile phase. The amount of carboxylic acid modification was obtained from the quantitative result of an unreacted carboxylic acid.

### <Evaluation of vinyl chloride polymer particles>

With respect to the vinyl chloride polymer particles, the particle size distribution and packing specific gravity were measured according to the following methods.

### (1) Particle size distribution

Each content of particles of JIS standard sieve 42-mesh on and particles of JIS standard sieve 200-mesh pass were indicated in wt%. "42-mesh on" means that the particles do not pass through the screen of the 42-mesh JIS standard sieve so as to be retained on the screen. The smaller the content of particles of "42-mesh on", the fewer the coarse particles should be. "200-mesh pass" means that the particles pass through the screen of the 200-mesh JIS standard sieve. The smaller the content of particles of "200-mesh pass", the fewer the microparticles should be. Accordingly, it means that the smaller the content of these, the more uniform particles have been obtained.
A: Less than 0.5%
B: 0.5% or more but less than 1%
C: 1% or more

### (2) Packing specific gravity

A measurement was performed in accordance with JIS K6721.

### <Evaluation of occurrence of dry foam>

The occurrence of dry foam in the polymerization tank was evaluated by the following method.

### (1) Foaming

After the completion of the polymerization, before purging an unreacted vinyl chloride monomer, the state of foaming in the polymerization tank was observed from an observation window on the side of the autoclave. It was evaluated according to the following criteria:
A: Very little amount of foaming occurred;
B: Foaming occurred; and
C: A considerable amount of foaming occurred.

### (2) Scale adhesion

After the polymer slurry had been taken out of the polymerization tank, the adhesion of scale onto the inner wall of the polymerization tank was observed visually for evaluation. It was evaluated according to the following criteria:
A: Very little amount of scale adhered;
B: Scale adhered; and
C: A considerable amount of scale adhered.

### Example 1

### <Synthesis of PVA (A) - heat-treating method>

After 100 parts of the powdered PVA (B) with a polymerization degree of 400 and a saponification degree of 80 mol% was added to a solution in which 4 parts of fumaric acid had been dissolved in 200 parts of methanol and was then allowed to swell, it was dried under reduced pressure at a temperature of 40°C for 24 hours. Subsequently, this was heat-treated under a nitrogen atmosphere at 125°C for 2 hours. Thus, PVA (A) was obtained. The amount of modification with the carboxylic acid was 0.36 mol%.

### <Suspension polymerization of vinyl chloride>

0.1 part of PVA with a polymerization degree of 2000 and a saponification degree of 80 mol% was dissolved in deionized water (90L) so that a dispersion stabilizer was prepared, and it was introduced into a polymerization tank equipped with a reflux condenser with a volume of 200 L. Then 0.1 part of t-butyl peroxyneoheptanoate was introduced therein and oxygen was then removed through deaeration carried out until the pressure inside the polymerization tank was reduced to 0.0067 MPa. Thereafter, 100 parts of vinyl chloride was introduced, and under stirring, the temperature thereof was raised to 63°C by allowing hot water to pass through the jacket. Thus, polymerization was started. The pressure inside the polymerization tank at the start of the polymerization was 1.02 MPa. The polymerization is continued subsequently, and at the time when the polymerization conversion had reached 70%, 10 L of an aqueous solution of the above-synthesized PVA (A) (0.02 part expressed as the PVA (A)) modified with fumaric acid was added thereto. At the time when the pressure inside the polymerization tank had reached 0.5 MPa, the polymerization was stopped, and an unreacted monomer was collected. Thereafter, the polymerization slurry was taken out and was dried overnight at 65°C. Thus, vinyl chloride polymer particles were obtained. Table 1 indicates the evaluation results for the thus obtained vinyl chloride polymer particles and the occurrence of dry foam.

### Examples 2 to 7

Using PVA (A) synthesized in the same manner as in Example 1 except that the PVA (B) and a carboxylic acid compound having an unsaturated double bond indicated in Table 1 were used and heat treatment was carried out under the conditions indicated in Table 1, suspension polymerization of vinyl chloride was carried out in the same manner as in Example 1 except that the PVA (A) was added at the time of the polymerization conversion indicated in Table 1. Thus, vinyl chloride polymer particles were obtained. Table 1 indicates the evaluation results for the vinyl chloride polymer particles.

### Comparative Example 1

Suspension polymerization of vinyl chloride was carried out in the same manner as in Example 1 except that the PVA (A) was not added. Thus, vinyl chloride polymer particles were obtained. Table 1 indicates the evaluation results. A large number of coarse particles were contained and uniform polymer particles were not obtained. Further, after the polymerization, a considerable amount of foam was observed and a considerable amount of scale adhered onto the inner wall of the polymerization tank.

### Comparative Example 2

Using PVA obtained in the same manner as in Example 1 except that the carboxylic acid compound was not used and the powdered PVA (B) was heat-treated under the conditions indicated in Table 1, suspension polymerization of vinyl chloride was carried out in the same manner as in Example 1. Thus, vinyl chloride polymer particles were obtained. Table 1 indicates the evaluation results. Coarse particles were contained and uniform polymer particles were not obtained. Further, after the polymerization, foam was observed and scale adhered onto the inner wall of the polymerization tank.

### Comparative Example 3

Using PVA obtained in the same manner as in Example 1 except that a carboxylic acid compound having an unsaturated double bond indicated in Table 1 was used and no heat treatment was carried out on it, suspension polymerization of vinyl chloride was carried out in the same manner as in Example 1. Thus, vinyl chloride polymer particles were obtained. Table 1 indicates the evaluation results. Coarse particles were contained and uniform polymer particles were not obtained. Further, after the polymerization, foam was observed and scale adhered onto the inner wall of the polymerization tank.

### Comparative Example 4

Suspension polymerization of vinyl chloride was carried out in the same manner as in Example 1 except that PVA (A) synthesized in the same manner as in Example 2 was added at the time when the polymerization conversion was 5%. Thus, vinyl chloride polymer particles were obtained. Table 1 indicates the evaluation results. Coarse particles were contained and uniform polymer particles were not obtained. Further, after the polymerization, a considerable amount of foam was observed and a considerable amount of scale adhered onto the inner wall of the polymerization tank.

### Comparative Example 5

### <Synthesis of itaconic acid-modified PVA polymer (itaconic acid-vinyl alcohol copolymer)>

1050 g of vinyl acetate and 1950g of methanol were introduced into a 6 L reactor equipped with a stirrer, a nitrogen inlet, a reflux condenser and an additive inlet, and the temperature thereof was raised to 60°C. Then, the atmosphere inside the system was replaced by nitrogen through 30-minute nitrogen bubbling. A solution was prepared by dissolving itaconic acid as a comonomer in methanol at a concentration of 20%, and the atmosphere thereof was replaced by nitrogen through bubbling with nitrogen gas. The temperature inside the reactor was adjusted to 60°C, and 2.8 mL of 20% itaconic acid-methanol solution was added. Thereafter, 2.0 g of 2,2'-azobis(isobutyronitrile) was added thereto so that polymerization was started. During the polymerization, the polymerization temperature was maintained at 60°C, and 20% itaconic acid-methanol solution was continuously added at a rate of 10 mL/hour. At the time when 4.5 hours had elapsed and the polymerization conversion had reached 50%, the polymerization was stopped by cooling. Subsequently, a methanol solution of modified PVAc was obtained by removing an unreacted vinyl acetate monomer under reduced pressure. To the methanol solution adjusted to 40% was added an NaOH methanol solution (10% concentration) so that the alkali mole ratio (the mole number of NaOH/the mole number of the vinyl ester units in the modified PVAc) was 0.02, thus causing saponification. The saponification degree of the modified PVA thus obtained was 68 mol%.

Reprecipitation purification was repeated three times in which the methanol solution of the modified PVAc obtained by removing an unreacted vinyl acetate monomer after the polymerization was dropped into n-hexane, allowing the modified PVAc to precipitate, and then the collected modified PVAc was dissolved in acetone. Thereafter, it was dried under reduced pressure at 60°C. Thus, a purified matter of the modified PVAc was obtained. The amount of modification of the modified PVAc determined by proton NMR was 1 mol%. After saponification of the above methanol solution of the modified PVAc with alkali mole ratio of 0.2, Soxhlet extraction with methanol was performed for three days, followed by drying. Thus, a purified matter of the modified PVA was obtained. The average polymerization degree of the modified PVA was 520, as measured according to JIS K6726, which is a conventional method.

An itaconic acid-modified PVA polymer was obtained by the above operation, having a polymerization degree of 520, a saponification degree of 68 mol% and an amount of modification of 1.0 mol%. Using the itaconic acid-modified PVA polymer, suspension polymerization of vinyl chloride was carried out in the same manner as in Example 1. Thus, vinyl chloride polymer particles were obtained. Table 1 indicates the evaluation results. Coarse particles were contained and uniform polymer particles were not obtained. Further, after the polymerization, foam was observed and scale adhered onto the inner wall of the polymerization tank.

**Table 1**

| | PVA (B) | | PVA (A) | | | | | | Vinyl chloride polymer particles | | | Occurrence of dry foam | |
|---|---|---|---|---|---|---|---|---|---|---|---|---|---|
| | | | Heat-treatment conditions | | Carboxylic acid compound | Amount of modification | Addition amount | Addition time (Polymerization conversion) | Particle size distribution | | Packing Specific gravity | Foaming | Scale adhesion amount |
| | Polymerization degree | Saponification degree | Temperature | Time | | | | | 42 mesh on | 200 mesh pass | | | |
| | | mol% | °C | hr. | | mol% | (part) | % | | | g/cc | | |
| EX.1 | 400 | 80 | 125 | 2 | Fumaric acid | 0.36 | 0.02 | 70 | A | A | 0.54 | A | A |
| EX. 2 | 400 | 80 | 125 | 2 | Maleic acid | 0.18 | 0.02 | 70 | A | A | 0.53 | A | A |
| EX. 3 | 400 | 80 | 125 | 2 | Itaconic acid | 0.28 | 0.02 | 50 | A | A | 0.53 | A | A |
| EX. 4 | 400 | 80 | 125 | 2 | Crotonic acid | 0.37 | 0.02 | 50 | A | A | 0.54 | A | A |
| EX. 5 | 2000 | 80 | 115 | 3 | Itaconic acid | 0.31 | 0.02 | 70 | A | A | 0.55 | A | A |
| EX. 6 | 400 | 80 | 125 | 2 | Fumaric acid | 0.36 | 0.02 | 30 | A | A | 0.52 | A | A |
| EX. 7 | 400 | 80 | 125 | 2 | Fumaric acid | 0.36 | 0.02 | 80 | A | A | 0.55 | A | A |
| C.EX. 1 | - | - | - | - | - | - | - | - | C | A | 0.44 | C | C |
| C.EX. 2 | 400 | 80 | 125 | 2 | - | - | 0.02 | 70 | B | A | 0.45 | B | B |
| C.EX. 3 | 400 | 80 | - | - | Maleic acid | 0.00 | 0.02 | 70 | B | A | 0.45 | B | B |
| C.EX. 4 | 400 | 80 | 125 | 2 | Maleic acid | 0.18 | 0.02 | 5 | B | C | 0.50 | C | C |
| C.EX. 5 | (520) | (68) | Itaconic acid-modified PVA (Copolymer) | | | (1.0) | 0.02 | 70 | B | A | 0.50 | B | B |

### Example 8

### <Synthesis of PVA polymer (A) - melting and kneading method>

With respect to 100 parts of the powdered PVA (B) having a polymerization degree of 600 and a saponification degree of 70 mol%, 1 part of fumaric acid was dry-blended. This was melted and kneaded at a temperature of 200°C for 3 minutes using a Labo Prastomill. Thus, PVA (A) was obtained. The amount of carboxylic acid modification was 0.41 mol%.

### <Suspension polymerization of vinyl chloride>

Suspension polymerization of vinyl chloride was carried out in the same manner as in Example 1 except that the addition amount and time of the PVA (A) were as indicated in Table 2. Thus, vinyl chloride polymer particles were obtained. Table 2 indicates the evaluation results.

### Example 9

Using PVA (A) synthesized in the same manner as in Example 8 except that a carboxylic acid compound indicated in Table 2 was used and melting and kneading were carried out under the conditions indicated in Table 2, suspension polymerization of vinyl chloride was carried out in the same manner as in Example 8. Thus, vinyl chloride polymer particles were obtained. Table 2 indicates the evaluation results.

### Comparative Example 6

Using PVA obtained in the same manner as in Example 8 except that melting and kneading were carried out without fumaric acid being dry-blended, suspension polymerization of vinyl chloride was carried out in the same manner as in Example 8. A large number of coarse particles were contained and uniform polymer particles were not obtained. Further, after the polymerization, foam was observed and scale adhered onto the inner wall of the polymerization tank.

**Table 2**

| | PVA (B) | | PVA (A) | | | | | | Vinyl chloride polymer particles | | | Occurrence of dry foam | |
|---|---|---|---|---|---|---|---|---|---|---|---|---|---|
| | | | Melting and kneading conditions | | Carboxylic acid compound | Amount of modification | Addition amount | Addition time (Polymerization conversion) | Particle size distribution | | Packing Specific gravity | Foaming | Scale adhesion amount |
| | Polymerization degree | Saponification degree | Temperature | Time | | | | | 42 mesh on | 200 mesh pass | | | |
| | | mol% | °C | min. | | mol% | (part) | % | | | g/cc | | |
| EX. 8 | 600 | 70 | 200 | 3 | Fumaric acid | 0.41 | 0.03 | 50 | A | A | 0.55 | A | A |
| EX. 9 | 600 | 70 | 195 | 3 | Itaconic acid | 0.39 | 0.03 | 50 | A | A | 0.54 | A | A |
| C.EX. 6 | 600 | 70 | 205 | 3 | - | - | 0.03 | 50 | C | C | 0.44 | B | B |

### Example 10

### <Synthesis of PVA (A) - heat-treating method>

After 100 parts by weight of the powdered PVA (B) having a polymerization degree of 500 and a saponification degree of 80 mol% was added to a solution in which 3 parts of adipic acid had been dissolved in 200 parts of methanol and was then allowed to swell, it was dried under reduced pressure at a temperature of 40 °C for 24 hours. Subsequently, this was heat-treated under a nitrogen atmosphere at 120°C for 5 hours. Thus, PVA (A) was obtained. The amount of modification with the carboxylic acid was 0.32 mol%.

### <Suspension polymerization of vinyl chloride>

0.1 part of PVA with a polymerization degree of 2400 and a saponification degree of 80 mol% was dissolved in deionized water (90 L) so that a dispersion stabilizer was prepared, and it was introduced into a polymerization tank equipped with a reflux condenser with a volume of 200 L. Then 0.1 part of t-butyl peroxyneoheptanoate was introduced therein and oxygen was then removed through deaeration carried out until the pressure inside the polymerization tank was reduced to 0.0067 MPa. Thereafter, 100 parts of vinyl chloride was introduced, and under stirring, the temperature thereof was raised to 63°C by allowing hot water to pass through the jacket. Thus, polymerization was started. The pressure inside the polymerization tank at the start of polymerization was 1.02 MPa. The polymerization is continued subsequently, and at the time when the polymerization conversion had reached 75%, 10 L of an aqueous solution of the above-synthesized PVA (A) (0.02 part expressed as the PVA (A)) modified with adipic acid was added thereto. At the time when the pressure inside the polymerization tank had reached 0.5 MPa, the polymerization was stopped, and an unreacted monomer was collected. Thereafter, the polymerization slurry was taken out and was dried overnight at 65°C. Thus, vinyl chloride polymer particles were obtained. Table 3 indicates the evaluation results for the thus obtained vinyl chloride polymer particles and the occurrence of dry foam.

### Examples 11 to 13

Using PVA (A) synthesized in the same manner as in Example 10 except that PVA (B) and a carboxylic acid compound indicated in Table 3 were used and heat treatment was carried out under the conditions indicated in Table 3, suspension polymerization of vinyl chloride was carried out in the same manner as in Example 10 except that the PVA (A) was added at the time of the polymerization conversion indicated in Table 3. Thus, vinyl chloride polymer particles were obtained. Table 3 indicates the evaluation results for the vinyl chloride polymer particles.

### Comparative Example 7

Suspension polymerization of vinyl chloride was carried out in the same manner as in Example 10 except that the PVA (A) was not added. Thus, vinyl chloride polymer particles were obtained. Table 3 indicates the evaluation results. A large number of coarse particles were contained and uniform polymer particles were not obtained. Further, after the polymerization, a considerable amount of foam was observed and a considerable amount of scale adhered onto the inner wall of the polymerization tank.

### Comparative Example 8

Using PVA obtained in the same manner as in Example 10 except that a carboxylic acid compound was not used and powdered PVA (B) was heat-treated under the conditions indicated in Table 3, suspension polymerization of vinyl chloride was carried out in the same manner as in Example 10. Thus, vinyl chloride polymer particles were obtained. Table 3 indicates the evaluation results. Coarse particles were contained and uniform polymer particles were not obtained. Further, after the polymerization, foam was observed and scale adhered onto the inner wall of the polymerization tank.

### Comparative Example 9

Using PVA obtained in the same manner as in Example 10 except that heat treatment under a nitrogen atmosphere was not carried out, suspension polymerization of vinyl chloride was carried out in the same manner as in Example 10. Thus, vinyl chloride polymer particles were obtained. Table 3 indicates the evaluation results. Coarse particles were contained and uniform polymer particles were not obtained. Further, after the polymerization, foam was observed and scale adhered onto the inner wall of the polymerization tank.

### Comparative Example 10

Suspension polymerization of vinyl chloride was carried out in the same manner as in Example 10 except that PVA (A) synthesized in the same manner as in Example 10 was added at the time when the polymerization conversion was 5%. Thus, vinyl chloride polymer particles were obtained. Table 3 indicates the evaluation results. Coarse particles were contained and uniform polymer particles were not obtained. Further, after the polymerization, a considerable amount of foam was observed and a considerable amount of scale adhered onto the inner wall of the polymerization tank.

**Table 3**

| | PVA (B) | | PVA (A) | | | | | | Vinyl chloride polymer particles | | | Occurrence of dry foam | |
|---|---|---|---|---|---|---|---|---|---|---|---|---|---|
| | | | Heat-treatment conditions | | Carboxylic acid compound | Amount of modification | Addition amount | Addition time (Polymerization conversion) | Particle size distribution | | Packing Specific gravity | Foaming | Scale adhesion amount |
| | Polymerization degree | Saponification degree | Temperature | Time | | | | | 42 mesh on | 200 mesh pass | | | |
| | | mol% | °C | hr. | | mol% | (part) | % | | | g/cc | | |
| EX. 10 | 500 | 80 | 120 | 5 | Adipic acid | 0.32 | 0.02 | 75 | A | A | 0.55 | A | A |
| EX. 11 | 500 | 80 | 120 | 5 | Phthalic acid | 0.25 | 0.02 | 75 | A | A | 0.53 | A | A |
| EX. 12 | 500 | 80 | 120 | 5 | Lauric acid | 0.26 | 0.02 | 55 | A | A | 0.54 | A | A |
| EX. 13 | 1700 | 80 | 110 | 6 | Phthalic acid | 0.27 | 0.02 | 75 | A | A | 0.54 | A | A |
| C.EX. 7 | - | - | - | - | - | - | - | - | C | A | 0.44 | C | C |
| C.EX. 8 | 500 | 80 | 120 | 5 | - | - | 0.02 | 75 | B | A | 0.46 | B | B |
| C.EX. 9 | 500 | 80 | - | - | Adipic acid | 0.00 | 0.02 | 75 | B | A | 0.46 | B | B |
| C.EX. 10 | 500 | 80 | 120 | 5 | Adipic acid | 0.32 | 0.02 | 5 | B | C | 0.51 | C | C |

### Example 14

### < Synthesis of PVA polymer (A) - melting and kneading method >

With respect to 100 parts of powdered PVA (B) having a polymerization degree of 550 and a saponification degree of 70 mol%, 1 part of adipic acid was dry-blended. This was melted and kneaded at a temperature of 198°C for 3 minutes using a Labo Prastomill. Thus, PVA (A) was obtained. The amount of carboxylic acid modification was 0.31 mol%.

### <Suspension polymerization of vinyl chloride>

Suspension polymerization of vinyl chloride was carried out in the same manner as in Example 10 except that the addition amount and time of the PVA (A) were as indicated in Table 4. Thus, vinyl chloride polymer particles were obtained. Table 4 indicates the evaluation results.

### Example 15

Using PVA (A) synthesized in the same manner as in Example 14 except that a carboxylic acid compound indicated in Table 4 was used and melting and kneading were carried out under the conditions indicated in Table 4, suspension polymerization of vinyl chloride was carried out in the same manner as in Example 14. Thus, vinyl chloride polymer particles were obtained. Table 4 indicates the evaluation results.

### Comparative Example 11

Using PVA obtained in the same manner as in Example 14 except that melting and kneading were carried out without adipic acid being dry-blended, suspension polymerization of vinyl chloride was carried out in the same manner as in Example 14. A large number of coarse particles were contained and uniform polymer particles were not obtained. Further, after the polymerization, foam was observed and scale adhered onto the inner wall of the polymerization tank.

**Table 4**

| | PVA (B) | | PVA (A) | | | | | | Vinyl chloride polymer particles | | | Occurrence of dry foam | |
|---|---|---|---|---|---|---|---|---|---|---|---|---|---|
| | | | Melting and kneading conditions | | Carboxylic acid compound | Amount of modification | Addition amount | Addition time (Polymerization conversion) | Particle size distribution | | Packing Specific gravity | Foamimg | Scale adhesion amount |
| | Polymerization degree | Saponification degree | Temperature | Time | | | | | 42 mesh on | 200 mesh pass | | | |
| | | mol% | °C | min. | | mol% | (part) | % | | | g/cc | | |
| EX. 14 | 550 | 70 | 198 | 3 | Adipic acid | 0.31 | 0.03 | 60 | A | A | 0.55 | A | A |
| EX. 15 | 550 | 70 | 202 | 3 | Phthalic acid | 0.31 | 0.03 | 60 | A | A | 0.55 | A | A |
| C.EX. 11 | 550 | 70 | 200 | 3 | - | - | 0.03 | 60 | C | C | 0.45 | B | B |

### INDUSTRIAL APPLICABILITY

In producing a vinyl resin by suspension polymerization of a vinyl compound using a polymerization tank equipped with a reflux condenser, if the above-mentioned PVA is added thereto, uniform vinyl chloride polymer particles can be obtained and an excellent defoaming property can be achieved against dry foam that occurs in a polymerization tank at middle to later stages of polymerization, for example. Thus, industrial evaluation thereof is quite high.

## Claims

1. A method for producing a vinyl resin comprising the step of
in suspension polymerization of a vinyl compound using a polymerization tank equipped with a reflux condenser in the presence of a dispersion stabilizer for suspension polymerization, adding, at the time when the polymerization conversion is 20 to 85%, 0.001 to 5 parts by weight, with respect to 100 parts by weight of the vinyl compound, of a vinyl alcohol polymer (A) that has, in its side chain, an unsaturated double bond, an aromatic group optionally having a carboxyl group, a saturated aliphatic group having a carboxyl group, or a saturated aliphatic group having at least 11 carbon atoms, wherein the vinyl alcohol polymer (A) is a vinyl alcohol polymer obtained by esterification of a vinyl alcohol polymer (B) with a carboxylic acid compound having an unsaturated double bond, an aromatic group optionally having a carboxyl group, a saturated aliphatic group having a carboxyl group, or a saturated aliphatic group having at least 11 carbon atoms.

2. The method for producing a vinyl resin according to claim 1, wherein the vinyl alcohol polymer (A) has, in its side chain, an unsaturated double bond, an aromatic group having a carboxyl group, or a saturated aliphatic group having a carboxyl group.

3. The method for producing a vinyl resin according to claim 1, wherein the vinyl alcohol polymer (B) has a saponification degree of 50 to 99 mol%.

4. The method for producing a vinyl resin according to claim 1, wherein the carboxylic acid compound is a carboxylic acid having at least two carboxyl groups.

5. The method for producing a vinyl resin according to claim 1, wherein the amount of modification of the vinyl alcohol polymer (A) with the carboxylic acid compound is 0.01 to 50 mol% with respect to monomer units of the vinyl alcohol polymer (B).

6. The method for producing a vinyl resin according to any of claims 1 to 5, wherein the vinyl compound(s) subjected to suspension polymerization include a vinyl halide.

7. The method for producing a vinyl resin according to claim 6, wherein the vinyl halide is vinyl chloride, subjected to homopolymerization or copolymerization.

## Patentansprüche

1. Verfahren zum Herstellen eines Vinylharzes, umfassend die Schritte:
Polymerisieren einer Vinylverbindung in Suspension unter Verwendung eines mit einem Rückflußkondensator ausgestatteten Polymerisationsbehälters in Anwesenheit eines Dispersionsstabilisierungsmittels zur Suspensionspolymerisation, Hinzufügen von 0,001 bis 5 Gewichtsanteilen eines Vinylalkoholpolymers (A), das in seiner Seitenkette eine ungesättigte Doppelbindung, eine aromatische Gruppe mit einer optionalen Carboxylgruppe, eine gesättigte aliphatische Gruppe mit einer Carboxylgruppe oder eine gesättigte aliphatische Gruppe mit wenigstens 11 Kohlenstoffatomen aufweist, in Bezug auf 100 Gewichtsanteile der Vinylverbindung zu der Zeit, wenn die Polymerisationskonversion 20 bis 85% beträgt, wobei das Vinylalkoholpolymer (A) ein Vinylalkoholpolymer ist, das durch Veresterung eines Vinylalkoholpolymers (B) mit einer Carbonsäureverbindung, die eine ungesättigte Doppelbindung, eine aromatische Gruppe mit einer optionalen Carboxylgruppe, eine gesättigte aliphatische Gruppe mit einer Carboxylgruppe oder eine gesättigte aliphatische Gruppe mit wenigstens 11 Kohlenstoffatomen aufweist, erhalten wird.

2. Verfahren zum Herstellen eines Vinylharzes nach Anspruch 1, wobei das Vinylalkoholpolymer (A) in seiner Seitenkette eine ungesättigte Doppelbindung, eine aromatische Gruppe mit einer Carboxylgruppe oder eine gesättigte aliphatische Gruppe mit einer Carboxylgruppe aufweist.

3. Verfahren zum Herstellen eines Vinylharzes nach Anspruch 1, wobei das Vinylalkoholpolymer (B) einen Seifenbildungsgrad von 50 bis 99 Mol% aufweist.

4. Verfahren zum Herstellen eines Vinylharzes nach Anspruch 1, wobei die Carbonsäureverbindung eine Carbonsäure mit wenigstens zwei Carboxylgruppen ist.

5. Verfahren zum Herstellen eines Vinylharzes nach Anspruch 1, wobei der Modifikationsgrad des Vinylalkoholpolymers (A) mit der Carbonsäureverbindung 0,01 bis 50 Mol% in Bezug auf Monomereinheiten des Vinylalkoholpolymers (B) beträgt.

6. Verfahren zum Herstellen eines Vinylharzes nach einem der Ansprüche 1 bis 5, wobei die Vinylverbindung(en), die Suspensionspolymerisation unterzogen wird/werden, ein Vinylhalid umfaßt.

7. Verfahren zum Herstellen eines Vinylharzes nach Anspruch 6, wobei das Vinylhalid Vinylchlorid ist, das Homopolymerisation oder Co-Polymerisation unterzogen wird.

## Revendications

1. Procédé de production d'une résine de vinyle comprenant l'étape de :
polymérisation en suspension d'un composé vinylique en utilisant une cuve de polymérisation équipée d'un réfrigérant à reflux en présence d'un stabilisateur de dispersion pour une polymérisation en suspension, en ajoutant, lorsque la conversion de la polymérisation est de 20 à 85 %, de 0,001 à 5 parties en poids, par rapport à 100 parties en poids du composé vinylique, d'un polymère d'alcool vinylique (A) qui comprend, dans sa chaîne latérale, une double liaison insaturée, un groupe aromatique ayant facultativement un groupe carboxyle, un groupe aliphatique saturé ayant un groupe carboxyle, ou un groupe aliphatique saturé comprenant au moins 11 atomes de carbone, le polymère d'alcool vinylique (A) étant un polymère d'alcool vinylique obtenu par estérification d'un polymère d'alcool vinylique (B) avec un composé d'acide carboxylique ayant une double liaison insaturée, un groupe aromatique ayant facultativement un groupe carboxyle, un groupe aliphatique saturé ayant un groupe carboxyle ou un groupe aliphatique saturé comprenant au moins 11 atomes de carbone.

2. Procédé de production d'une résine de vinyle selon la revendication 1, dans lequel le polymère d'alcool vinylique (A) comprend, dans sa chaîne latérale, une double liaison insaturée, un groupe aromatique ayant un groupe carboxyle ou un groupe aliphatique saturé ayant un groupe carboxyle.

3. Procédé de production d'une résine de vinyle selon la revendication 1, dans lequel le polymère d'alcool vinylique (B) a un degré de saponification de 50 à 99 % en moles.

4. Procédé de production d'une résine de vinyle selon la revendication 1, dans lequel le composé d'acide carboxylique est un acide carboxylique ayant au moins deux groupes carboxyle.

5. Procédé de production d'une résine de vinyle selon la revendication 1, dans lequel la quantité de modification du polymère d'alcool vinylique (A) avec le composé d'acide carboxylique est de 0,01 à 50 % en moles par rapport aux motifs monomères du polymère d'alcool vinylique (B).

6. Procédé de production d'une résine de vinyle selon l'une quelconque des revendications 1 à 5, dans lequel le ou les composés vinyliques soumis à une polymérisation en suspension comprennent un halogénure de vinyle.

7. Procédé de production d'une résine de vinyle selon la revendication 6, dans lequel l'halogénure de vinyle est le chlorure de vinyle, soumis à une homopolymérisation ou une copolymérisation.
